# EUROPEAN PATENT SPECIFICATION

(11) **EP 4 264 023 B1**
(45) Date of publication and mention of the grant of the patent: **06.05.2026**
(21) Application number: 21907235.2
(22) Date of filing: 10.12.2021
(51) Int. Cl.: F01L 13/06, F16K 15/18

(54) **ROCKER ARM VALVE MECHANISM**
KIPPHEBELVENTILMECHANISMUS
MÉCANISME DE SOUPAPE À CULBUTEUR

(30) Priority: 18.12.2020 SE 2051487
(43) Date of publication of application: 25.10.2023
(73) Proprietor: Gnutti Carlo Sweden AB, 422 43 Hisings Backa (SE)
(72) Inventor: KARLIN, Michael, 541 46 Skövde (SE); LINDBERG, Ulric, 413 21 Göteborg (SE); SJÖGREN, Johan, 736 32 Kungsör (SE); MOHLIN, Johan, 531 59 Lidköping (SE)
(74) Representative: Zacco Sweden AB
(86) International application number: PCT/SE2021/051233
(87) International publication number: WO 2022/131996

(56) References cited:
- WO-A1-2017/160379
- WO-A1-2017/197044
- WO-A1-2019/120556
- WO-A1-2020/202094
- WO-A1-2020/202094
- JP-U- S5 688 906
- JP-U- S5 688 906
- US-A1- 2011 073 068
- US-A1- 2020 182 098

## Description

### TECHNICAL FIELD

The present invention relates to a valve mechanism system in a hydraulic rocker arm for a combustion engine, comprising a check valve spring and a check valve ball.

Said spring is arranged to be in contact with the check valve ball and wherein said spring and ball are arranged in a seat in a recess in the rocker arm. The recess has a first opening to a rocker arm channel connected to a hydraulic element (piston) and a second opening to a rocker arm oil supply via a second channel.

The system further comprises a control piston having a first end with a pin axially aligned with the control piston arranged in contact with said check valve ball on the opposite side of the check valve ball from the check valve spring. The check valve ball is movable between a first position allowing oil to flow to and from the oil supply and a second position stopping oil from flowing between the two channels. A control piston spring is arranged on a second end of the control piston such that it biases the control piston towards the check valve ball.

### BACKGROUND

The role of the decompression release exhaust brake, hereafter called engine brake, is to convert a power-producing engine into a power-absorbing retarding mechanism and the valve train is a significant part of this mechanism. The engine braking mechanism for a four-stroke diesel engine is as follows. On the normal intake stroke, the intake valve opens, and air is forced into the cylinder by boost pressure from the turbocharger. Then, in the compression stroke, air is compressed by the engine piston.

The energy required to compress this air is produced by the driving wheels of the vehicle. Near top dead center, the engine brake opens the exhaust valves, venting high-pressure air and dissipating the stored energy through the exhaust system. On the downward stroke, essentially no energy is returned to the piston and to the driving wheels. There is a loss of energy and this loss is how the retarding work is accomplished.

The timing of the valve opening event is important because the piston at top dead center has done the maximum amount of work. If the valve is opened early, not much power will be absorbed. Similarly, if the valve is opened after top dead center, some power has been returned to the crank by the compressed air. As the valve opening event moves away from top dead center, the engine brake becomes less effective. In practice, it is necessary to use a cam or rocker motion that occurs close to top dead center for timing the valve opening event.

One common characteristic of all engine brakes is that retarding power increases as engine revolutions per minute increase. In general, the same things that affect retarding performance are engine displacement, compression ratio, turbo boost, and the timing of the valve opening event. In its simplest description, the engine brake converts a diesel engine into an air compressor. Higher compression ratios producing higher cylinder pressures would result in higher retarding performance.

For the engine brake to function correctly, the valve lash must be eliminated. The lubrication system of the engine is used for this purpose. It activates a power piston in the exhaust rocker arm by means of a solenoid valve in the cylinder head and this piston eliminates the valve lash. The lower part of the piston is in contact with the exhaust valves either directly or through intermediate components e.g. ball socket and valve bridge.

During normal operation, the oil supply pressure in the rocker shaft is low and the power piston stays in its original position. The control piston is resting against the check valve ball and prevents it from closing. No hydraulic lock is created.

When the engine brake is activated, the oil supply pressure in the rocker shaft is raised by the solenoid valve in the cylinder head and the control piston moves away from check valve ball enabling it to close against the valve seat. The power piston moves outward and eliminates the valve lash. When the brake lift cam event starts, the check valve closes and creates a hydraulic lock between cam lobe and exhaust valves. The camshaft is now in direct contact with the exhaust valves, and the extra cams provides the engine brake lift events.

To deactivate the engine brake, the solenoid valve lowers the rocker shaft oil supply pressure whereby the control piston pin opens the check valve. The hydraulic lock is eliminated, power piston retracts which increases valve lash and there are no brake lift events available.

Optionally, a pressure-limiting valve is built into the power piston, which opens to drain oil if the oil pressure becomes abnormally high. Previously, it was the driver's job to ascertain the correct transmission gear to use, depending on, for example, the steepness of the grade and the truck's load. However, the job of the driver has to a large extent been taken over by the powertrain and vehicle control system.

Various improvements have been made and development is ever ongoing, especially to reduce fuel consumption. Higher power density and faster response are goals that lead to new challenges.

WO2020202094A1 discloses a valve control device for an internal combustion engine comprising a rocker arm with an internal actuation device, a driving piston, and a valve. The system includes hydraulic channels and chambers for controlling valve movement. However, it does not disclose a pre-assembled, closed cartridge containing all functional parts (including the seat and ball) with at least two oil flow openings in the seat part.

### SUMMARY

It is an object of the present invention to provide an alternative control valve for a diesel compression release exhaust brake system and/or a variable valve train system.

According to the invention a valve mechanism system in a hydraulic rocker arm for a combustion engine, comprises a check valve spring and a check valve ball. Said spring is arranged to be in contact with the check valve ball and wherein said spring and ball is arranged in a seat in a recess in the rocker arm. The recess has a first opening to a rocker arm channel connected to a hydraulic element and a second opening to the rocker arm oil supply via a second channel.

The system further comprises a control piston having a first end with a pin axially aligned with the control piston arranged in contact with said check valve ball on the opposite side of the check valve ball from the check valve spring. The check valve ball is movable between a first position allowing oil to flow to and from the oil supply and a second position stopping oil from flowing between the two channels. A control piston spring is arranged on a second end of the control piston such that it biases the control piston towards the check valve ball.

The control piston is in an axial direction movably arranged in a cylinder shaped cartridge and the cartridge has a first end arranged towards the outside of the rocker arm and a second end in the axial direction opposite inner end. The cartridge is arranged in said recess in the rocker arm.

One of the advantages of having a cartridge is that the parts inside the cartridge can be preassembled and arranged in the cartridge which leads to a faster assembly of the rocker arm.

According to one alternative of the present disclosure, the hydraulic element is a piston.

According to the invention, the second end of the cartridge has an opening that is larger than the pin of the control piston and smaller than the control piston. More specifically, the opening of the cartridge has a diameter that is larger than the diameter of the pin of the control piston but a smaller than the diameter of the control piston such that the piston won't fall out of the cartridge before assembled in the rocker arm.

According to yet a further aspect of the present disclosure the outside of the second end of the cartridge has a seat for the check valve ball. The seat facilitates for the check valve ball to be positioned in the correct position and thus minimizes leakage.

According to the invention the cartridge comprises two parts, a first part comprising the first end with an inside cylinder shape to house the control piston and a second seat part comprising the second end having at least two openings for allowing oil to flow to and from a rocker arm oil supply via the second opening in the recess.

By having the cartridge be made out of two parts, with one part comprising the first end with its inside cylinder shape arranged to house the control piston and with the second seat part comprising the second end, production is facilitated.

According to yet another aspect of the present disclosure, the cartridge comprises an outer circumferential ledge, the surface of which is perpendicular to an axial extension of said cartridge, and a mating seat provided in the rocker arm. By pressing the cartridge in the axial direction into the recess the ledge of the cartridge will be pressed against the axially perpendicular plane of the seat and thus create a tight seal. Generally, similar prior solutions are secured to a recess by a press fit for achieving a seal. Alternatively, the surface of the outer circumferential ledge and the mating seat provided in the rocker arm are both conical. Thus, the mating of the surfaces provide a guiding function as well as a sealing function.

According to an alternative aspect of the present disclosure, when the cartridge comprises two parts, i.e. a first part comprising the first end with an inside cylinder shape to house the control piston and a second seat part comprising the second end having at least one opening in a radial direction for allowing oil to flow to and from a rocker arm oil supply via the second opening in the recess, the second seat part of the cartridge comprises an outer circumferential ledge, the surface of which is perpendicular to an axial extension of said cartridge, and a mating seat provided in the rocker arm. Similarly, by pressing the cartridge in the axial direction into the recess the ledge of the cartridge will be pressed against the axially perpendicular plane of the seat and thus create a tight seal. As stated above, similar prior art solutions are secured to a recess by a press fit for achieving a seal.

According to a preferred aspect of the present disclosure, the cartridge has outer threads for engaging with inner threads of the recess in the rocker arm. This facilitates achieving a desired pressure of the cartridge to the recess for an efficient seal.

According to an alternative preferred aspect of the present disclosure, the first part of the cartridge has outer threads for engaging with inner threads of the recess in the rocker arm.

According to a further aspect of the present disclosure the first end of the cartridge has a structure allowing for engagement with a tool. For instance, the structure could be compatible with a torx key such that the cartridge could be screwed into the recess of the rocker arm.

Further features of, and advantages with, the present invention will become apparent when studying the appended claims and the following description. The skilled person realize that different features of the present invention may be combined to create embodiments other than those described in the following, without departing from the scope of the present invention, as defined in the appendend claims.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
- Figure 1: is a view of a rocker arm,
- Figure 2: is a cross section along the line A-A of figure 1, and
- Figure 3: is cross section along the line C-C of figure 1.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

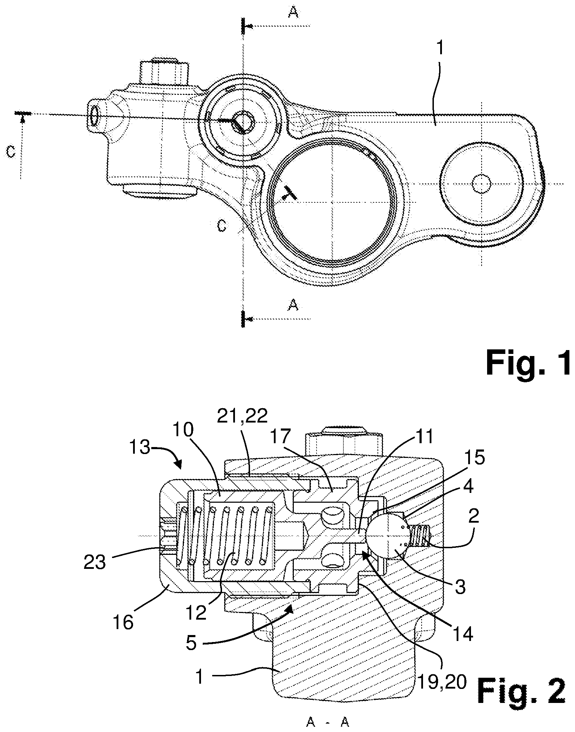

With reference to figure 1 a rocker arm 1 is shown together with cross section lines A-A and C-C.

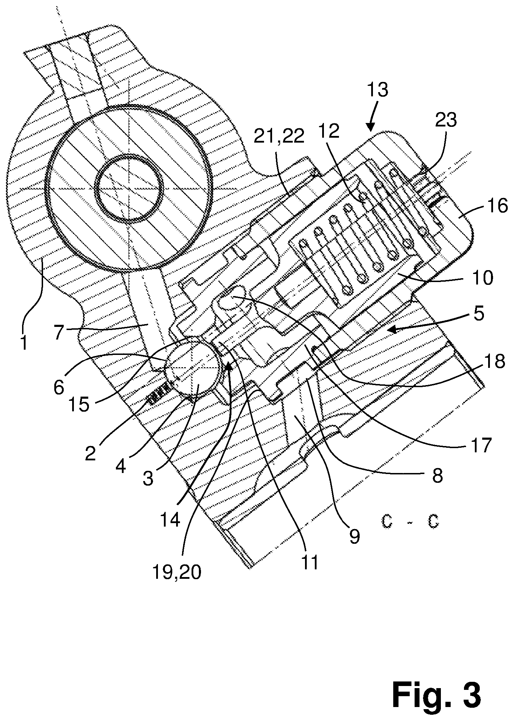

Figure 2 relates to the cross section A-A and figure 3 to cross section C-C. Figure 3 shows a valve mechanism system in a hydraulic rocker arm 1 for a combustion engine, comprising a check valve spring 2 and a check valve ball 3. Said spring 2 is arranged in contact with the check valve ball 3 and said spring 2 and ball 3 are arranged in a seat 4 in a recess 5 in the rocker arm 1.

The recess 5 has a first opening 6 to a rocker arm channel 7 connected to a hydraulic element and a second opening 8 to a rocker arm oil supply via a second channel 9. The system further comprises a control piston 10 having a first end with a pin 11 axially aligned with the control piston 10 arranged in contact with said check valve ball 3 on the opposite side of the check valve ball 3 from the check valve spring 2.

The check valve ball 3 is movable between a first position allowing oil to flow to and from the oil supply and a second position stopping oil from flowing between the two channels 7, 9. A control piston spring 12 is further arranged on a second end of the control piston 10 and biases the control piston 10 towards the check valve ball 3.

The control piston 10 is in an axial direction movably arranged in a cylinder shaped cartridge 13 and the cartridge has a first end arranged towards the outside of the rocker arm 1 and a second end in the axial direction opposite inner end. The cartridge is arranged in said recess 5 in the rocker arm 1.

As further can be seen in figures 2 and 3, the second end of the cartridge 13 has an opening 14 that is larger than the diameter of the pin 11 of the control piston 10 and smaller than the control piston diameter. Also, the outside of the second end of the cartridge has a seat 15 for the check valve ball 3.

In the shown embodiment, the cartridge 13 comprises two parts. A first part 16 comprises the first end with an inside cylinder shape to house the control piston 10 and a second seat part 17 that comprises the second end having at least two or more openings 18 for allowing oil to flow to and from a rocker arm oil supply via the second opening 8 in the recess.

Further, the cartridge 13 comprises an outer circumferential ledge 19 with an axially perpendicular plane and a corresponding axially perpendicular plane of a seat 20 in the rocker arm 1. More specifically, in the embodiment shown the second seat part 17 of the cartridge comprises an outer circumferential ledge 19 with an axially perpendicular plane and a corresponding axially perpendicular plane of a seat 20 in the rocker arm 1.

As indicated in figures 2 and 3, the cartridge 13 has outer threads 21 for engaging with inner threads 22 of the recess 5 in the rocker arm 1. More specifically in the embodiment shown, the first part 16 of the cartridge 13 has outer threads 21 for engaging with inner threads 22 of the recess 5 in the rocker arm 1.

In the shown embodiment, the first end of the cartridge 13 has a structure 23 allowing for engagement with a tool, in this case a torx key. Thus, when assembling the valve system, a torx key is used to screw the cartridge 13 into the recess 5. The torque applied should be adapted to the desired sealing function of the circumferential ledge 19 of the second seat part 17 with an axially perpendicular plane of the cartridge against the corresponding axially perpendicular plane of the seat 20 in the rocker arm 1. For making sure the cartridge 13 does not unscrew itself from the recess 5 it could for instance be soldered or welded to the rocker arm 1.

It is to be understood that the present invention is not limited to the embodiments described above and illustrated in the drawings; rather, the skilled person will recognize that many changes and modifications may be made within the scope of the appended claims. For example, the structure 23 of the cartridge 13 could be of another type, for instance an outer hexagon shape such that the cartridge 13 is instead screwed into the recess 5 with a wrench.

## Claims

1. A valve mechanism system in a hydraulic rocker arm (1) for a combustion engine, comprising a check valve spring (2) and a check valve ball (3), wherein said spring (2) is arranged to be in contact with the check valve ball (3) and wherein said spring (2) and ball (3) are arranged in a seat (4) in a recess (5) in the rocker arm (1), the recess (5) having a first opening (6) to a rocker arm channel (7) connected to a hydraulic element and a second opening (8) to a rocker arm oil supply via a second channel (9), the system further comprising a control piston (10) having a first end with a pin (11) axially aligned with the control piston (10) arranged in contact with said check valve ball (3) on the opposite side of the check valve ball (3) from the check valve spring (2), the check valve ball (3) being movable between a first position allowing oil to flow to and from the oil supply and a second position stopping oil from flowing between the two channels (7, 9), wherein a control piston spring (12) is arranged on a second end of the control piston (10) such that it biases the control piston (10) towards the check valve ball (3),
wherein the control piston (10) in an axial direction is movably arranged in a cylinder shaped cartridge (13) and that the cartridge has a first end arranged towards the outside of the rocker arm (1) and a second end in the axial direction opposite inner end, wherein the cartridge is arranged in said recess (5) in the rocker arm (1)
wherein the second end of the cartridge (13) has an opening (14) that is larger than the diameter of the pin (11) of the control piston (10) and smaller than the control piston diameter
wherein the cartridge (13) comprises two parts, a first part (16) comprising the first end with an inside cylinder shape to house the control piston (10) and a second seat part (17) comprising the second end **characterised in** having at least two
openings (18) arranged to allow oil to flow to and from a rocker arm oil supply via the second opening (8) in the recess when the check valve ball (3) is in said first position.

2. The valve mechanism system according to claim 1, wherein the hydraulic element is a piston.

3. The valve mechanism system according to any of the preceding claims, wherein the outside of the second end of the cartridge has a seat (15) for the check valve ball (3).

4. The valve mechanism system according to any of the preceding claims, wherein the cartridge (13) comprises an outer circumferential ledge (19) and wherein a seat (20) for said ledge (19) is provided in the rocker arm (1).

5. The valve mechanism system according to any one of the preceding claims, wherein the second seat part (17) of the cartridge comprises an outer circumferential ledge (19) and wherein a seat (20) for said ledge (19) is provided in the rocker arm (1).

6. The valve mechanism system according to any of the preceding claims, wherein the cartridge (13) has outer threads (21) for engaging with inner threads (22) of the recess (5) in the rocker arm (1).

7. The valve mechanism system according to any one of the preceding claims, wherein the first part (16) of the cartridge (13) has outer threads (21) for engaging with inner threads (22) of the recess (5) in the rocker arm (1).

8. The valve mechanism system according to any of the claims 6 and 7, wherein the first end of the cartridge (13) has a tool engagement structure (23).

## Patentansprüche

1. Ventilmechanismussystem in einem hydraulischen Kipphebel (1) für einen Verbrennungsmotor, umfassend eine Rückschlagventilfeder (2) und eine Rückschlagventilkugel (3), wobei die Feder (2) so angeordnet ist, dass sie mit der Rückschlagventilkugel (3) in Kontakt steht, und wobei die Feder (2) und die Kugel (3) in einem Sitz (4) in einer Aussparung (5) im Kipphebel (1) angeordnet sind, wobei die Aussparung (5) eine erste Öffnung (6) zu einem Kipphebelkanal (7), der mit einem hydraulischen Element verbunden ist, und eine zweite Öffnung (8) zu einer Kipphebel-Ölversorgung über einen zweiten Kanal (9) aufweist, wobei das System ferner einen Steuerkolben (10) umfasst, der an einem ersten Ende einen Stift (11) hat, der axial mit dem Steuerkolben (10) ausgerichtet ist und in Kontakt mit der Rückschlagventilkugel (3) auf der der Rückschlagventilfeder (2) gegenüberliegenden Seite der Rückschlagventilkugel (3) angeordnet ist, wobei die Rückschlagventilkugel (3) zwischen einer ersten Position, die einen Ölfluss zu und von der Ölversorgung zulässt, und einer zweiten Position, die den Ölfluss zwischen den beiden Kanälen (7, 9) unterbricht, beweglich ist, wobei eine Steuerkolbenfeder (12) an einem zweiten Ende des Steuerkolbens (10) angeordnet ist, so dass sie den Steuerkolben (10) in Richtung der Rückschlagventilkugel (3) vorgespannt hält, wobei der Steuerkolben (10) in axialer Richtung beweglich in einer zylinderförmigen Patrone (13) angeordnet ist und die Patrone ein erstes Ende aufweist, das nach außen zum Kipphebel (1) angeordnet ist, und ein zweites Ende in axialer Richtung gegenüberliegend dem inneren Ende aufweist, wobei die Patrone in der Aussparung (5) im Kipphebel (1) angeordnet ist, wobei das zweite Ende der Patrone (13) eine Öffnung (14) aufweist, die größer als der Durchmesser des Stifts (11) des Steuerkolbens (10) und kleiner als der Durchmesser des Steuerkolbens ist,
wobei die Patrone (13) zwei Teile umfasst, einen ersten Teil (16), der das erste Ende mit einer innen zylindrischen Form zur Aufnahme des Steuerkolbens (10) umfasst, und einen zweiten Sitzteil (17), der das zweite Ende umfasst, **dadurch gekennzeichnet, dass** sie mindestens zwei Öffnungen (18) aufweist, die so ausgelegt sind, dass Öl zu und von einer Kipphebel-Ölversorgung über die zweite Öffnung (8) in der Aussparung fließen kann, wenn die Rückschlagventilkugel (3) in der ersten Position ist.

2. Ventilmechanismussystem nach Anspruch 1, wobei das hydraulische Element ein Kolben ist.

3. Ventilmechanismussystem nach einem der vorhergehenden Ansprüche, wobei die Außenseite des zweiten Endes der Patrone einen Sitz (15) für die Rückschlagventilkugel (3) aufweist.

4. Ventilmechanismussystem nach einem der vorhergehenden Ansprüche, wobei die Patrone (13) einen äußeren Umfangsvorsprung (19) umfasst und wobei ein Sitz (20) für den Vorsprung (19) im Kipphebel (1) vorgesehen ist.

5. Ventilmechanismussystem nach einem der vorhergehenden Ansprüche, wobei der zweite Sitzteil (17) der Patrone einen äußeren Umfangsvorsprung (19) umfasst und wobei ein Sitz (20) für den Vorsprung (19) im Kipphebel (1) vorgesehen ist.

6. Ventilmechanismussystem nach einem der vorhergehenden Ansprüche, wobei die Patrone (13) Außengewinde (21) zum Eingriff mit Innengewinden (22) der Aussparung (5) im Kipphebel (1) aufweist.

7. Ventilmechanismussystem nach einem der vorhergehenden Ansprüche, wobei der erste Teil (16) der Patrone (13) Außengewinde (21) zum Eingriff mit Innengewinden (22) der Aussparung (5) im Kipphebel (1) aufweist.

8. Ventilmechanismussystem nach einem der Ansprüche 6 und 7, wobei das erste Ende der Patrone (13) eine Werkzeugeingriffsstruktur (23) aufweist.

## Revendications

1. Système de mécanisme de soupape dans un culbuteur hydraulique (1) pour un moteur à combustion, comprenant un ressort de soupape antiretour (2) et une bille de soupape antiretour (3), dans lequel ledit ressort (2) est agencé pour être en contact avec la bille de soupape antiretour (3) et dans lequel lesdits ressort (2) et bille (3) sont agencés dans un siège (4) dans un évidement (5) dans le culbuteur (1), l'évidement (5) présentant une première ouverture (6) vers un canal de culbuteur (7) relié à un élément hydraulique et une seconde ouverture (8) vers une alimentation en huile de culbuteur via un second canal (9), le système comprenant en outre un piston de commande (10) présentant une première extrémité avec un pointeau (11) aligné axialement avec le piston de commande (10) agencé en contact avec ladite bille de soupape antiretour (3) sur le côté opposé de la bille de soupape antiretour (3) par rapport au ressort de soupape antiretour (2), la bille de soupape antiretour (3) étant mobile entre une première position permettant à l'huile de s'écouler depuis et vers l'alimentation en huile et une seconde position empêchant l'huile de s'écouler entre les deux canaux (7, 9), dans lequel un ressort de piston de commande (12) est agencé sur une seconde extrémité du piston de commande (10) de sorte qu'il sollicite le piston de commande (10) vers la bille de soupape antiretour (3), dans lequel le piston de commande (10) dans une direction axiale est agencé de façon mobile dans une cartouche de forme cylindrique (13) et en ce que la cartouche présente une première extrémité agencée vers l'extérieur du culbuteur (1) et une seconde extrémité dans la direction axiale opposée à l'extrémité intérieure, dans lequel la cartouche est agencée dans ledit évidement (5) dans le culbuteur (1), dans lequel la seconde extrémité de la cartouche (13) présente une ouverture (14) qui est plus grande que le diamètre du pointeau (11) du piston de commande (10) et plus petite que le diamètre du piston de commande, dans lequel la cartouche (13) comprend deux parties, une première partie (16) comprenant la première extrémité avec une forme de cylindre intérieur pour loger le piston de commande (10) et une seconde partie de siège (17) comprenant la seconde extrémité, **caractérisé en ce que** celle-ci présente au moins deux ouvertures (18) agencées pour permettre à l'huile de s'écouler depuis et vers une alimentation en huile de culbuteur via la seconde ouverture (8) dans l'évidement lorsque la bille de soupape antiretour (3) est dans ladite première position.

2. Système de mécanisme de soupape selon la revendication 1, dans lequel l'élément hydraulique est un piston.

3. Système de mécanisme de soupape selon l'une quelconque des revendications précédentes, dans lequel l'extérieur de la seconde extrémité de la cartouche présente un siège (15) pour la bille de soupape antiretour (3).

4. Système de mécanisme de soupape selon l'une quelconque des revendications précédentes, dans lequel la cartouche (13) comprend un rebord circonférentiel extérieur (19) et dans lequel un siège (20) pour ledit rebord (19) est prévu dans le culbuteur (1).

5. Système de mécanisme de soupape selon l'une quelconque des revendications précédentes, dans lequel la seconde partie de siège (17) de la cartouche comprend un rebord circonférentiel extérieur (19) et dans lequel un siège (20) pour ledit rebord (19) est prévu dans le culbuteur (1).

6. Système de mécanisme de soupape selon l'une quelconque des revendications précédentes, dans lequel la cartouche (13) présente des filetages extérieurs (21) pour venir en prise avec des filetages intérieurs (22) de l'évidement (5) dans le culbuteur (1).

7. Système de mécanisme de soupape selon l'une quelconque des revendications précédentes, dans lequel la première partie (16) de la cartouche (13) présente des filetages extérieurs (21) pour venir en prise avec des filetages intérieurs (22) de l'évidement (5) dans le culbuteur (1).

8. Système de mécanisme de soupape selon l'une quelconque des revendications 6 et 7, dans lequel la première extrémité de la cartouche (13) présente une structure de mise en prise d'outil (23) .
